# EUROPÄISCHE PATENTSCHRIFT

(11) **EP 1 423 322 B1**
(45) Veröffentlichungstag und Bekanntmachung des Hinweises auf die Patenterteilung: **12.07.2006**
(21) Anmeldenummer: 01982221.2
(22) Anmeldetag: 29.08.2001
(51) Int. Cl.: B65H 19/10

(54) **MASCHINELL ERKENNBARES KLEBEBAND**
MACHINE-DETECTABLE ADHESIVE TAPE
BANDE ADHESIVE DETECTABLE PAR MACHINE

(43) Veröffentlichungstag der Anmeldung: 02.06.2004
(73) Patentinhaber: tesa AG, 20253 Hamburg (DE)
(72) Erfinder: EIKMEIER, Markus, 22769 Hamburg (DE); GEBBEKEN, Bernhard, Dr., 21075 Hamburg (DE); GASSNER, Thomas, 25436 Heidgraben (DE); NAGEL, Christoph, 22417 Hamburg (DE)
(86) Internationale Anmeldenummer: PCT/EP2001/009964
(87) Internationale Veröffentlichungsnummer: WO 2003/018454

(56) Entgegenhaltungen:
- EP-A- 0 683 122
- US-A- 5 901 919

## Beschreibung

Die Erfindung betrifft ein Klebeband für den fliegenden Rollenwechsel von auf Rollen aufgewickeltem Flachbahnmaterial, ausgerüstet mit zumindest einem klebenden spaltbaren System, sowie ein Spliceverfahren für den fliegenden Rollenwechsel von auf Rollen aufgewickelten Flachbahnmaterial.

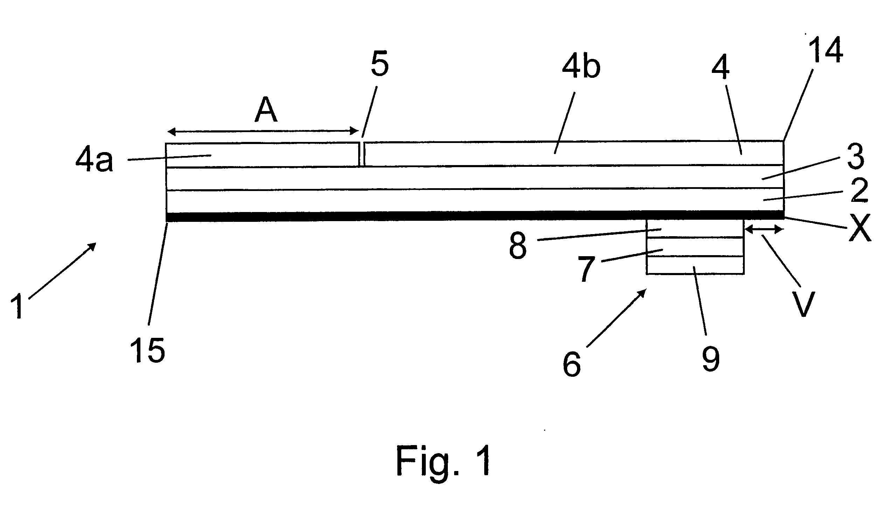

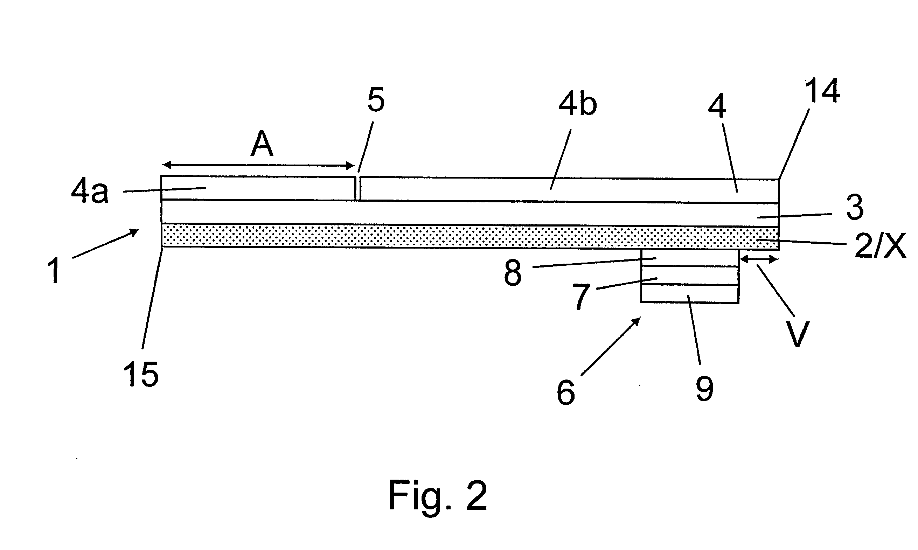

Der fliegende Rollenwechsel ist in Papierfabriken oder dergleichen ein gängiges Verfahren, um eine alte, fast abgespulte Papierrolle durch eine neue zu ersetzen, ohne die schnell laufenden Maschinen anhalten zu müssen. Das Ende der alten Papierbahn wird dabei mit dem Anfang der neuen Papierbahn verklebt, um einen möglichst kontinuierlichen Betrieb zu gewährleisten. Hierfür werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören.
Klassisch werden die Fixe in Handarbeit am Bahnanfang verklebt, dieser Prozeß erfordert den Einsatz von Fachpersonal und für zu technisch nicht vorteilhaften Ergebnissen, da die Verklebungen durch die Abfolge von Papierbahnen und Klebestreifen relativ dick sind.
Für die Verklebung beim fliegenden Rollenwechsel sind diverse Produkte erhältlich, insbesondere solche, welche neben einem Papierträger eine wasserlösliche Selbstklebemasse beidseits beschichtet aufweisen.
Aus der EP 418 527 A2 ist ein Verfahren zum Vorbereiten einer Bedruckstoffbahnrolle in einem Rollenwechsler einer Rotationsdruckmaschine bekannt, bei dem Klebestreifen verwendet werden, die in drei Zonen unterteilt sind (Sp. 3, Z. 12 ff. und Fig. 1 und 2), wobei die mittlere Zone 6 perforiert ist. An dieser Perforierung findet dann das Aufreißen statt.
In der Praxis haben derartige Klebebänder jedoch gravierende Nachteile, insbesondere durch nach dem Splice vorliegende klebende Flächen.

Es ist aus DE 196 28 317 A1 aber auch bereits ein Klebeband für derartige Anwendungen bekannt, bei dem nach erfolgten Splice keine klebenden Flächen mehr auftreten, indem dort ein spaltfähiger Papierträger zum Einsatz kommt, der beim Splice spaltet und nach erfolgtem Splice die Klebmassen abdeckt. Auch aus DE 196 32 689 A1 ist ein ähnliches Klebeband für diese Anwendung bekannt, wobei hier jedoch ein spaltfähiger Papierträger eingesetzt wird, der über die gesamte Breite des Klebebandes spaltet.

Das nichtklebende Abdecken von sonst offen liegenden klebenden Bereichen offenbart DE 196 32 689 A2. Hier wird ein Klebeband für dynamische Belastungen beim Spliceverfahren beschrieben, dessen Papierträger spaltet und mit seinen Resten die Klebemassen abdeckt.

Die DE 198 30 673 zeigt ein Klebeband für den fliegenden Rollenwechsel in Papierveredelungsmaschinen oder dergleichen, welche einen beidseitig mit einer wasserlöslichen Selbstklebemasse beschichteten Papierträger aufweist. Ein Randbereich der Rückseite des Klebebandes ist mit einem einseitig klebenden Klebeband ausgerüstet, welches seinerseits einen spaltfähigen Papierträger aufweist.
Eine weitere Variante ist in DE 198 30 674 beschrieben. Hier ist ein Klebeband mit zwei Spaltstreifen dargestellt.

Auch die DE 199 02 179 A1 zeigt ein Klebeband für ein Spliceverfahren. Dieses Klebeband trägt an seiner nichtklebenden Rückseite ein doppelseitiges Klebeband, welches einen spaltfähigen Papierträger aufweist, der beim Spliceverfahren spaltet und die jeweiligen Kleber abdeckt. Zur Vermeidung von Reißern beim fliegenden Rollenwechsel ist das aufkaschierte Klebeband mit einem Papierträger aus Spaltpapier eingerückt angeordnet, nämlich in einem gewissen Abstand von der Längskante des Klebebandes

Die EP 1 041 025 A zeigt ein klebeband nach dem Oberbegriff des Anspruch 1 und ein Spliceverfahren nach dem Oberbegriff des anspruchs 3.

Aufgabe der Erfindung ist es, ein Klebeband und ein Spliceverfahren zur Verfügung zu stellen, welches die Nachteile des Standes der Technik nicht oder nur in verminderter Weise aufweist und welches eine automatisierte Steuerung des Spliceverfahrens erlaubt.

Gelöst wird diese Aufgabe überraschend und für den Fachmann nicht vorhersehbar durch ein Klebeband, wie es im Hauptanspruch dargestellt ist, sowie durch ein Verfahren, wie es in Anspruch 3 dargelegt wird. Der Unteranspruch betrifft eine Ausführungsform des erfinderischen Klebebandes.

Als Detektoren lassen sich Metalldetektoren einsetzen. Hierzu werden dem eigentlichen Trägermaterial beispielsweise Metallpulver- oder Granulate beigemischt, oder das Trägergrundgerüst wird mit einer oder mehreren Metallschichten versehen. In einer Variante des erfinderischen Klebebandes wird die integrierte Signalfunktion in der Art realisiert, daß der Hauptträger auf der Ober- und/oder auf der Unterseite mit einer Aluminiumschicht versehen ist, und zwar vollflächig.

Zur Herstellung einer Ausführungsform des erfinderisch eingesetzten Hauptträgers lassen sich alle Verfahren anwenden, die es erlauben, Trägermaterialien mit einer oder mehreren Metallschichten zu versehen. Hierzu zählen beispielsweise:
- Verbünde aus einer oder mehreren Aluminiumfolien und einer oder mehreren Schichten eines oder verschiedener Trägermaterialien. Die einzelnen Schichten können laminiert, verklebt, verschweißt, zusammengepreßt, zusammengeprägt, gesintert oder anderweitig bevorzugt dauerhaft, aber auch reversibel miteinander verbunden werden, auch eine Kombination dieser Verfahren ist möglich,
- Beschichtungen des Trägermaterials mit dünnen Aluminiumschichten durch Bedampfen, Bestreichen, Besprühen, Besputtern und dergleichen,
wobei die Beschichtungen chemisch und/oder physikalisch erfolgen können,
- alle weiteren für diesen Zweck geeigneten Coatingverfahren
- sowie Mehrfachbeschichtungen nach einem oder mehreren der oben angeführten Methoden.
Statt Aluminium lassen sich als Schicht auch alle weiteren entsprechend der Anforderungen detektierbaren Materialien verwenden, insbesondere Metalle, beispielsweise Kupfer, Silber, Gold.

Das erfinderische Klebeband wird beim Beschleunigen der Papierrolle detektiert und somit der Splicevorgang zum richtigen Zeitpunkt ausgelöst, weiterhin wird die Aluminiumschicht in der sogenannten Makulaturweiche detektiert, bei der die Papiermenge aussortiert wird, welche den Splice enthält. Das erfinderische Klebeband übernimmt somit Funktionen, welche bisher durch zusätzliche Etiketten oder Markierungen gewährleistet wurden. Durch die bisher verwendeten Etiketten sind Fehlerquellen bedingt, da der Signalgeber und das Splice-Klebeband genau zueinander justiert werden müssen.
Bei bisherigen Verfahren wird die Erkennung standardmäßig durch ein aluminisiertes Etikett gewährleistet. Dabei besteht die Gefahr, daß das Etikett falsch positioniert wird, hierdurch können mehrere Probleme auftreten.
Zum einen kann das Etikett außerhalb des Erkennungsfeldes des Detektor geklebt sein. Dabei erkennt der Rollenwechsler dann nicht die Klebestelle und es kommt nicht zum Rollenwechsel, das heißt es muß die Maschine angehalten werden, das Papier muß manuell in die Druckmaschine eingezogen werden.
Zum zweiten muß der Abstand zwischen Klebestelle und aluminisiertem Etikett genau definiert sein und auch genau eingehalten werden. Stimmen diese Abstände nicht, wird die alte Papierbahn entweder zu früh oder zu spät abgeschnitten. Beim zu frühen Abschneiden kann es passieren, daß die Verklebung zwischen neuer Rolle und ablaufender Bahn noch nicht ausreichend stattgefunden hat, so kommt es dann zu einem Abriß, der auch wieder Maschinenstillstände zur Folge hat. Wird die alte Bahn zu spät abgeschnitten, verlängert sich der überstehenden Papierrest, die s.g. Fahne. Eine zu lange Fahne kann im weiteren Verarbeitungsprozeß, wie dem Drucken aus der Papierbahn herausragen und an Umlenkrollen oder im Druckwerk hängen bleiben und so zu Störungen oder Abrissen führen.
Somit führen zum einen Ungenauigkeiten beim Verkleben zu einer gestörten Funktionsweise, zum anderen sind Fehlfunktionen darin begründet, daß das Signaletikett abfällt oder auf der Rolle "verrutscht". Weiterhin ist durch das Signaletikett eine zusätzliche Verklebung gegeben, bei welcher bei teilweisem Ablösen des Etiketts Klebeflächen unkontrolliert freiliegen können und den Papierverarbeitungsprozeß stören, beispielsweise das Papier unkontrolliert miteinander verkleben.

Durch die Integration der Schaltfunktion direkt in das Splice-Klebeband konnte die Splicesicherheit gegenüber dem bisherigen Vorgehen deutlich erhöht werden, es wurden wesentlich weniger Fehlfunktionen festgestellt.
Ein zusätzlicher Vorteil der Erfindung liegt darin, daß über das Splice-Klebeband kontaktlos Informationen an das Prozeßcontrolling weitergegeben werden können, beispielsweise Angaben zur aktuellen Rotationsgeschwindigkeit der neuen Rolle. Die Erfindung erlaubt es also auch, bei Fehlfunktionen der Apparatur, beispielsweise einer nicht korrekt laufenden neuen Rolle (falsche Geschwindigkleit, Unwucht oder dergleichen), einen Notstop zu initiieren oder andere Maßnahmen zur Korrektur des Fehlers einzuleiten.

Als Hauptträger wird bevorzugt wird ein reißfester Papier- oder Folienträger eingesetzt. Als Trägermaterialien seien hier beispielsweise angeführt: schwach gekreppte Papiere, maschinenglatte Rohpapiere, einseitig gestrichene glatte Rohpapiere, beidseitig gestrichene, verdichtete, bedruckbare Decorepapiere, einseitig doppel gestrichene, holzfreie, hochglänzende Kraftpapiere, ohne sich durch diese Beispiele in der Wahl der Trägermaterialien unnötig einschränken zu wollen.

Vorteilhaft wird ein spaltfähiges System eingesetzt, welches eine deutlich geringere Spaltfestigkeit als ein Papierträger aufweist, welcher Zugkräfte aufnehmen muß. Das oder die spaltbaren Systeme basieren bevorzugt auf geleimtem hochverdichtetem Papier, auf einem Verbund aus Papier und Folie oder auf einem Verbund aus zwei Folien, wobei der Verbund aus definiert punkt- und/oder linienförmig verbundenen Papieren und/oder Folien bestehen kann. Hierfür kommen beispielsweise insbesondere folgende Papiere, Papierverbundsysteme oder Folien in Frage:
- leicht spaltbare Papiersysteme, z. B. nicht naßfeste Papiere
- Duplexpapiere
   (definiert zusammenlaminierte Papiere, der Spaltvorgang verläuft extrem homogen; es entstehen keine Spannungsspitzen, z. B. durch inhomogene Verdichtung.
   Diese Papiere werden zur Herstellung von Tapeten und Filtern eingesetzt.)
- Definiert zusammengeleimte hochverdichtete Papiere (Papiere mit einer hohen Spaltfestigkeit).
   Die Leimung kann beispielsweise mit Stärke, stärkehaltigen Derivaten, Tapetenkleister auf Basis von Methylcellulose (tesa® Kleister , tesa AG, Hamburg; Methylan®, Henkel KgaA, Düsseldorf) oder auch auf Basis von Polyvinylalkoholderivaten erfolgen.
   Beschrieben werden solche Systeme beispielsweise in der EP 0 757 657 A1.
- Koextrudierte Folien.

Es ist besonders vorteilhaft, wenn die Spaltfestigkeit des Spaltsystems 5 bis 70 cN/cm, insbesondere 12 bis 60 cN/cm beträgt. Zur Spaltfestigkeit und ihrer Messung wird auf die DE 199 02 179 A1 verwiesen.

In einer sehr vorteilhaften Ausführungsform beträgt der Abstand (V) des doppelseitig klebenden Klebebandes (6) zur Vorderkante (Längskante 14) des Hauptträgers bis zu 15 mm, insbesondere 0,5 bis 15 mm, bevorzugt 1 bis 7 mm, sehr bevorzugt 1,5 bis 3,5 mm.

Werden mehrere spaltbare Systeme auf das Klebeband aufgebracht, so beträgt der Abstand der spaltbaren Systeme zueinander vorteilhaft 3 bis 50 mm. Bevorzugt werden Abstände von 25 bis 45 mm, ganz besonders Abstände von 30 bis 40 mm gewählt.

Bei dem erfindungsmäßigen Klebeband ist der Hauptträger breiter als die spaltbaren Systeme ist.
Die Breite des spaltbaren Systems beträgt bevorzugt 3 bis 40 mm, insbesondere 6 bis 12 mm.

Bei mehreren spaltfähigen Systemen auf dem Klebeband können diese aus dem gleichen Material bestehen und somit gleiche Spaltkräfte aufweisen, es kann aber auch von Vorteil sein, die spaltfähigen Systeme aus unterschiedlichem Material vorzusehen, so daß diese unterschiedliche Spaltkräfte besitzen.

In einer sehr bevorzugten Ausführungsform der Erfindung wird als Selbstklebemasse (im Sinne der Selbstklebemassen entsprechend der Positionsziffern 3, 8 und/oder 9 der Figuren) eine Acrylathaftklebemasse eingesetzt. Es können vorteilhaft sowohl wasserlösliche als auch wasserunlösliche Acrylate eingesetzt werden.
Weiterhin lassen sich auch Natur- und Synthesekautschukmassen als auch Dispersionen der vorstehend beschriebenen Verbindungen einsetzen. Es sei darauf verwiesen, daß prinzipiell alle Basistypen von Haftklebemassen, welche die erfinderischen Kriterien erfüllen, eingesetzt werden können.

In einer weiteren bevorzugten Ausführungsform ist die Selbstklebemasse mit einer Abdeckung versehen, die gegebenenfalls mit einer Perforation oder einem Schlitz in Längsrichtung versehen ist. Der Schlitz kann bevorzugt in einem Abstand A von 20 bis 40 mm von der Längskante 15 des Klebebands vorgesehen sein, welche der vorderen Längskante 14 gegenüber liegt, in deren Nähe das spaltfähige System 6 angeordnet ist.

Das Klebeband kommt in Rollenwechslern und Makulaturweichen zum Einsatz, bei denen die Spliceerkennung induktiv beziehungsweise berührungslos erfolgt. Das Klebeband wird bevorzugt eingesetzt in Verfahren, wie sie im folgenden näher beschrieben werden.

Die Erfindung betrifft weiterhin ein Spliceverfahren nach dem Anspruch 3.

In einer Weiterentwicklung des erfinderischen Verfahrens wird das Klebeband rechtwinklig zur laufenden Papierbahn verklebt. In vorteilhafte Varianten des erfinderischen Verfahrens kann die Verklebung des Klebebandes auch in einem spitzen Winkel von bis zu 30° zur laufenden Papierbahn, insbesondere von bis zu 10° erfolgen.

Bei dem Spliceverfahren wird ein Klebeband in einer geraden Linie unter die oberste Bahn auf eine neue Papierrolle verklebt, so daß ein Teil des Klebebandes frei bleibt, während die Unterseite des Klebebandes mit der darunter liegenden Bahn verklebt und damit die oberste Bahn sichert, wobei gegebenenfalls zunächst nur ein Teil der gegebenenfalls auf der Selbstklebemasse befindlichen Abdeckung abgezogen wurde, so daß der zum Spliceverfahren benötigte Teil der Selbstklebemasse noch mit der Abdeckung abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Bahn gedrückt wird, wobei die offenliegende Selbstklebemasse des Klebebandes mit der alten Bahn bei im wesentlichen gleichen Geschwindigkeiten der Bahnen verklebt, während zugleich der Spaltträger aus spaltfähigem Material spaltet und beide Selbstklebemassen, die auf ihm beschichtet waren, mit seinen Resten nichtklebend abdeckt.
Nach dem Kontakt des Klebebandes mit der ablaufenden Bahn kommt es also zum Spalten des spaltbaren Systems des Klebebandes, so daß die oberste Papierlage des neuen Ballens freigegeben wird und kein klebrigen Rückstände mehr offen vorliegen.
Um den hohen Temperaturen und/oder Drücken zu widerstehen, wird bevorzugt ein erfinderisches Klebeband eingesetzt, also ein solches, welches eine besonders scherfeste Klebemasse zum Verbinden der Papierbahnen besitzt.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes mit einer Aluminiumschicht
- Fig. 2: eine seitliche, schematische Ansicht eines erfindungsgemäßen Klebebandes mit einem detektierbaren Zusatz in der Trägerschicht
- Fig. 3: eine seitliche, schematische Ansicht eines Klebebandes gemäß Fig. 1, aufgeklebt auf eine Papierrolle und fertig für den fliegenden Rollenwechsel
- Fig. 4: eine Ansicht gemäß Fig. 2, aber nach erfolgtem fliegenden Rollenwechsel

Im einzelnen zeigt Fig. 1 ein Klebeband 1 mit einem Hauptträger 2, einseitig beschichtet mit einer wasserlöslichen Selbstklebemasse 3. Der Hauptträger 2 besteht aus einem Verbund aus schwach gekrepptem Papier und Aluminium. In dem Ausführungsbeispiel befindet sich eine Aluminiumschicht A auf der Unterseite des Hauptträgers 2. Die Gesamtdicke des Hauptträgers 2 mit Selbstklebemasse 3 beträgt 0,088 mm, die Breite 150 mm.
Abgedeckt ist die Selbstklebemasse 3 mit einem silikonisierten Trennpapier 4, das in 30 mm Abstand vom linken Rand mit einem Schlitz 5 versehen ist, so daß zunächst der linke Teil 4a des Trennpapiers 4 abgenommen werden kann, dann der rechte Teil 4b.
Im Bereich des rechten Endes des Klebebandes 1 ist ein Streifen eines doppelseitig klebenden Klebebandes 6 unterklebt, bestehend aus einem Papierträger 7 aus Spaltpapier, beidseits beschichtet mit wasserlöslicher Selbstklebemasse 8 bzw. 9. Das Klebeband hat eine Breite von 9 mm.

Fig. 2 zeigt ein entsprechendes erfinderisches Klebeband, bei welchen ein detektierbare Zusatz der Hauptträgerschicht 2 zugesetzt ist; in der Figur ist diese Schicht als 2/A bezeichnet. Bei dem Zusatz kann es sich beispielsweise um Metallstaub- oder Granulat, insbesondere um Aluminiumgranulat, handeln.

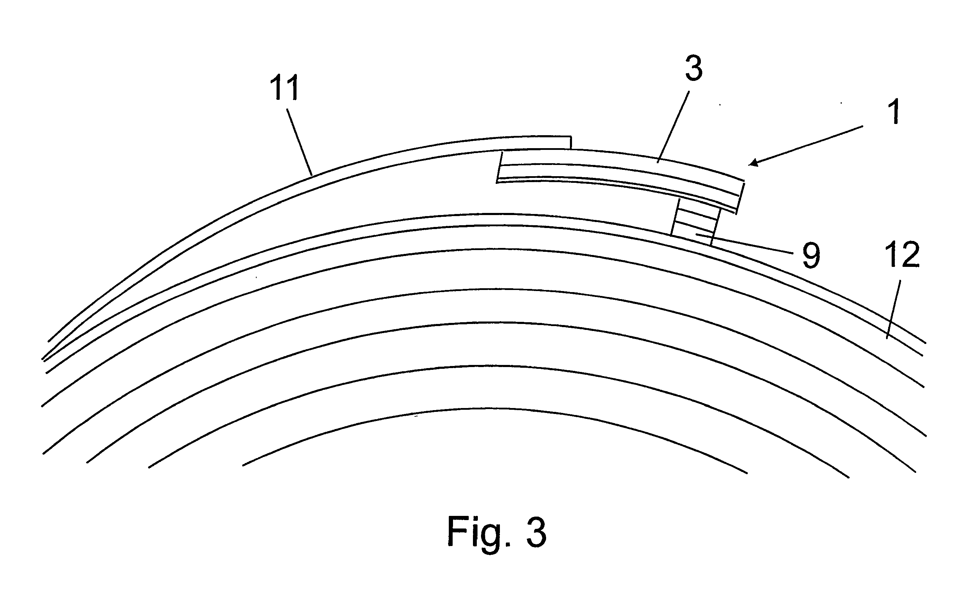

In Fig. 3 ist dargestellt, wie ein solches Klebeband 1 unter eine Papierbahn 11 einer neuen Papierrolle geklebt ist, und zwar mit dem linken Teil, nachdem von diesem der Teil 4a des Trennpapiers 4 abgezogen wurde. Vorher wurde das Klebeband mit den freiliegenden Selbstklebemasse 9 auf die unter der Papierbahn 11 liegende Papierbahn 12 der Papierrolle verklebt. Auch der rechte Teil 4b des Trennpapiers 4 wurde abgezogen, so daß die so ausgerüstete Papierrolle fertig für einen fliegenden Rollenwechsel ist, wobei die Verklebung des Klebebandes 1 im rechten Winkel über die Rolle läuft.
Die Selbstklebemasse 3 liegt nun offen und stellt für den fliegenden Wechsel die Kontaktfläche zu ablaufenden Bahnen dar. Die Kontaktfläche hat eine Breite von 120 mm und erstreckt sich über die gesamte Breite der Papierrolle.

Die so ausgerüstete (neue) Papierrolle wird neben die abgewickelte (alte) Papierrolle gebracht, an die die neue angesetzt werden soll. Die neue Papierrolle wird auf eine Drehgeschwindigkeit beschleunigt, die der Geschwindigkeit der ablaufenden Bahn nahezu entspricht. Sind beide Geschwindigkeiten ausreichend synchronisiert, kann der Wechsel vollzogen werden. Dabei wird die Klebestelle mittels eines Detektors, welcher sich am Rollenwechsler befindet, detektiert und die Position exakt lokalisiert.

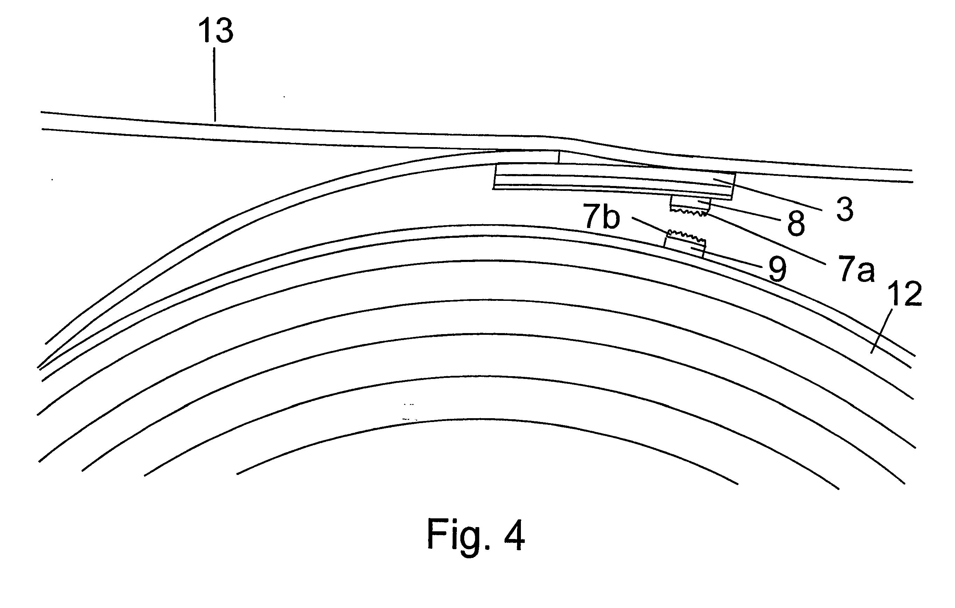

Die ablaufende Bahn 13 wird mittels Andruckwelle (nicht dargestellt) mit dem Umfang der neuen Rolle in Kontakt gebracht und die Selbstklebemasse 3 gemäß Fig. 4 mit der ablaufenden Papierbahn 13 verklebt. Mittels des Detektors und der Signalfunktion des Klebebandes wird der genaue Zeitpunkt festgestellt, an zu dem die ablaufende Papierbahn gegen die neue Papierrolle gedrückt wird, und das Abschneiden der alten Papierbahn geregelt. Augenblicklich nach dem Klebekontakt spalten die spaltfähigen Papierträger 7 derart, daß ein Teil 7a auf dem Klebeband 1 verbleibt und dort die Selbstklebemasse 8 abdeckt, während der andere Teil 7b auf der Selbstklebemasse 9 verbleibt, welche auf der Papierbahn 12 klebt. Damit sind beide Selbstklebemasse 8 und 9 gewissermaßen neutralisiert, kleben nicht mehr und stören damit auch nicht im weiteren Prozeß in den Papierverarbeitungsmaschinen.
Im weiteren Verlauf des Verarbeitungsprozesses wird der Bereich des Papiers mit der Klebestelle aussortiert, damit diese in der weiteren Funktion des Papiers nicht stört (so wird in Druckmaschinen beispielsweise verhindert, daß keine Zeitungen mit Verklebungsstellen in den Verkauf gelangen). Die Aussortierung geschieht an der sogenannten Makulaturweiche. Auch hier wird die Klebestelle über die integrierte Schaltfunktion berührungslos erkannt und das entsprechende Papierstück maschinell aussortiert.

Die Verwendung eines erfinderischen Klebebandes mit integrierter Schaltfunktion gewährleistet eine stete Erkennung ohne Applikation weiterer Etiketten. Somit ist jederzeit sichergestellt, daß eine Identifizierung der Verklebungsstelle möglich ist.

## Patentansprüche

1. Klebeband (1) für den fliegenden Rollenwechsel von auf Rollen aufgewickeltem Flachbahnmaterial, ausgerüstet mit einem Hauptträger (2), einer Selbstklebemasse (3) auf der Vorderseite und zumindest einem Streifen eines doppelseitig klebenden Klebebandes (6) auf der Rückseite, welches seinerseits einen spaltfähigen Träger (7) aufweist, der beidseits mit Selbstklebemasse (8, 9) ausgerüstet ist, wobei das Klebeband (1) mit zumindest einer mittels eines Detektors maschinell erkennbaren Vorrichtung X ausgerüstet ist, **dadurch gekennzeichnet, dass**
der Haupttrager breiter als das doppelseitig klebende Klebeband (6) ist und im sinne der Vorrichtung X auf der Ober- und/oder Unterseite vollflächig mit einer Metallschicht versehen ist

2. Klebeband nach Anspruch 1, **dadurch gekennzeichnet dass**
das Metall Aluminium, Kupfer, Silber oder Gold ist.

3. Spliceverfahren für den fliegenden Rollenwechsel von auf Rollen aufgewickeltem Flachbahnmaterial, bei weichem die oberste Papierbahn (11) einer neuen Rolle mit einem Klebeband (1), welches mit zumindest einem Hauptträger (2), zumindest einer Schicht einer Selbstklebemasse (3) auf der Vorderseite und zumindest einem doppelseitig klebenden Klebeband (6), welches seinerseits einen spaltfähigen Träger (7) aufweist, auf der Unterseite ausgerüstet ist, wobei das Klebeband (1) weiterhin mit zumindest einer mittels eines Detektors erkennbaren Vorrichtung (X) ausgerüstet ist, an der darunterliegenden Bahn (12) fixiert wird und ein zum Spliceverfahren benötigter Teil der Selbstklebemasse (3) offenliegt, woraufhin die so ausgerüstete neue Rolle neben eine fast gänzlich abgespulte zu ersetzende Rolle platziert wird und auf die im wesentlichen gleiche Drehgeschwindigkeit wie diese beschleunigt wird, dann gegen die alte Bahn gedrückt wird, wobei die offenliegende Selbstklebemasse (3) des Klebebandes (1) mit der alten Bahn (13) bei im wesentlichen gleichen Geschwindigkeiten der Bahnen verklebt, während zugleich der spaltfähige Träger (7) des doppelseitig klebender klebebandes (6) derart spaltet, daß nach dem Spaltvorgang keine Klebenden Bereiche offenliegen, und wobei der Zeitpunkt des Splicevorganges durch einen Detektor bestimmt wird, **dadurch gekennzeichnet, dass** bei dem Klebeband (1) der Hauptträger breiter als das doppelseitig klebende Klebande (6) ist und im Sinhe der Vorrichtung auf der Ober- und/oder Unterseite vollflächig mit einer Metallschicht versehen ist.

## Claims

1. Adhesive tape (1) for the flying reel change of flat web material wound up on reels, equipped with a main carrier (2), a self-adhesive compound (3) on the front side and at least one strip of a double-sided adhesive tape (6) on the rear side, which in turn has a cleavable carrier (7) which is equipped on both sides with self-adhesive compound (8, 9), the adhesive tape (1) being equipped with at least one device X which can be detected mechanically by means of a detector, **characterized in that** the main carrier is wider that the double-sided adhesive tape (6), and, in the context of the device X, is provided on the upper side and/or on the underside with a metal layer over the entire area.

2. Adhesive tape according to Claim 1, **characterized in that** the metal is aluminium, copper, silver, or gold.

3. Splicing method for the flying reel change of flat web material wound up on reels, in which the uppermost paper web (11) of a new reel is fixed to the web (12) lying underneath with an adhesive tape (1), which is equipped with at least one main carrier (2), at least one layer of a self-adhesive compound (3) on the front side and at least one double-sided adhesive tape (6), which in turn has a cleavable carrier (7), on the underside, the adhesive tape (1) being further equipped with at least one device (X) which can be detected mechanically by means of a detector, and part of the self-adhesive compound (3) which is needed for the splicing process is exposed, whereupon the new reel equipped in this way is placed beside a reel which has been unwound virtually completely and is to be replaced, and is accelerated to substantially the same rotational speed as the latter, is then pressed against the old web, the exposed self-adhesive compound (3) of the adhesive tape (1) bonding adhesively to the old web (13) at substantially the same speeds of the webs, while at the same time the cleavable carrier (7) of the double-sided adhesive tape (6) cleaves in such a way that, following the cleaving operation, no adhesive regions are exposed, and the time of the splicing operation being determined by a detector, **characterized in that** the adhesive tape (1) is wider than the double-sided adhesive tape (6), and in the context of the device X, is provided on the upper side and/or on the underside with a metal layer over the entire area.

## Revendications

1. Bande adhésive (1) pour le remplacement automatique de rouleaux de matériau en bande plane enroulé, pourvue d'un support principal (2), d'une masse auto-adhésive (3) sur la face supérieure et d'au moins un ruban de bande adhésive (6) double face sur la face arrière, qui présente pour sa part un support dissociable (7), qui est équipé des deux côtés de la masse auto-adhésive (8, 9), la bande adhésive (1) étant équipée d'au moins un dispositif X pouvant être détecté par machine au moyen d'un détecteur, **caractérisée en ce que** le support principal est plus large que la bande adhésive (6) double face et est pourvu sur toute sa surface d'une couche métallique au sens du dispositif X sur la face supérieure et/ou inférieure.

2. Bande adhésive selon la revendication 1, **caractérisée en ce que** le métal est l'aluminium, le cuivre, l'argent ou l'or.

3. Procédé de raccordement pour le remplacement automatique de rouleaux de matériau en bande plane enroulé, dans lequel la bande (11) supérieure de papier d'un nouveau rouleau est fixée avec une bande adhésive (1), qui est pourvue d'au moins un support principal (2), d'au moins une couche d'une masse auto-adhésive (3) sur la face antérieure et d'au moins une bande adhésive (6) double face, qui présente pour sa part un support dissociable (7), sur la face inférieure, la bande adhésive (1) étant en outre munie d'au moins un dispositif (X) pouvant être détecté avec un détecteur, étant fixée sur la bande (12) sous-jacente et une partie de la masse auto-adhésive (3) nécessaire pour le procédé de raccordement étant accessible, suite à quoi le nouveau rouleau ainsi apprêté est placé à côté d'un rouleau à remplacer, quasiment totalement déroulé et est accéléré essentiellement à la même vitesse de rotation que celui-ci, puis est comprimé contre l'ancienne bande, la masse auto-adhésive (3) accessible de la bande adhésive (1) étant collée avec l'ancienne bande (13) à des vitesses essentiellement identiques des bandes alors que le support (7) dissociable de la bande adhésive double face (6) se dissocie simultanément de telle manière qu'il ne reste plus, après le processus de dissociation, de zones adhésives accessibles et le moment du processus de raccordement étant déterminé par un détecteur, **caractérisé en ce que** dans la bande adhésive (1), le support principal est plus large que la bande adhésive (6) double face et est pourvu sur toute sa surface d'une couche métallique au sens du dispositif X sur la face supérieure et/ou inférieure.
